# EUROPÄISCHE PATENTSCHRIFT

(11) **EP 1 989 937 B1**
(45) Veröffentlichungstag und Bekanntmachung des Hinweises auf die Patenterteilung: **03.07.2013**
(21) Anmeldenummer: 08103893.7
(22) Anmeldetag: 09.05.2008
(51) Int. Cl.: A01J 5/04

(54) **Melkeinheit zum Melken eines Tieres**
Milking unit for milking an animal
Unité de traie destinée à traire un animal

(30) Priorität: 11.05.2007 DE 102007022803
(43) Veröffentlichungstag der Anmeldung: 12.11.2008
(73) Patentinhaber: GEA WestfaliaSurge GmbH, 59199 Bönen (DE)
(72) Erfinder: Auburger, Markus, 59558 Lippstadt (DE); Rohring, Thomas, 44141 Dortmund (DE)
(74) Vertreter: Neumann, Ditmar

(56) Entgegenhaltungen:
- WO-A1-2007/098959
- WO-A2-2004/110134
- WO-A2-2007/022950
- GB-A- 2 151 735

## Beschreibung

Der Gegenstand der Erfindung bezieht sich auf eine Melkeinheit nach dem Oberbegriff des Anspruchs 1.

Zum Melken von Milch abgebenden Tieren werden Melksysteme eingesetzt, die unterschiedlicher Ausgestaltung sein können. Der Melkvorgang als solcher wird mittels Melkbechern durchgeführt, die an die Zitzen des Tieres angebracht werden. Ein Melkbecher umfasst ein Zitzengummi, welches in einer Melkbecherhülse angeordnet ist. Zwischen dem Zitzengummi und der Melkbecherhülse ist ein Pulsraum vorgesehen. Das Zitzengummi wird entsprechend der Pulsatorfrequenz mit Unterdruck und Atmosphärendruck beaufschlagt. Hierzu ist der Melkbecher mit einem Pulsatorschlauch verbunden. Die ermolkene Milch wird aus dem Melkbecher über einen Milchschlauch abgeführt.

Es sind Melksysteme bekannt, bei denen jeder Milchschlauch mit einem Milchsammelstück verbunden ist. Das Milchsammelstück weist Stutzen auf, über die die Milchschläuche gestülpt sind. Jeder Anschlussstutzen weist ein schräg abgeschnittenes Ende auf. Der Milchschlauch wird an dem schräg abgeschnittenen Ende abgeklemmt, wenn der Zitzenbecher frei von dem Milchsammelstück herabhängt. Eine solche Anordnung ist beispielsweise durch die DE-A1-34 29 428 bekannt.

Der Milchschlauch wird auf den Anschlussstutzen aufgeschoben. Dabei entsteht eine kraftschlüssige Verbindung zwischen dem elastischen Milchschlauch, der aus schwarzem Gummi oder Silikon besteht, und dem starren Anschlussstutzen.. Dieser Kraftschluss muss ausreichend sein, um z. B. das Gewicht des Melkzeugs zu halten, ohne dass der Milchschlauch vom Anschlussstutzen abrutscht, da es vorkommt, dass das gesamte Melkzeug von nur einem Melkbecher gehalten wird. Gleichzeitig muss die Verbindung fluiddicht, insbesondere vakuumdicht sein, damit Milch sicher abgeführt werden kann.

Bedingt durch die Haftreibung zwischen dem Milchschlauch und dem Anschlussstutzen ist es zwingend notwendig, dass bei der Montage des Milchschlauchs der Anschlussstutzen fettfrei und sauber ist, um eine ausreichende Haftung zu erzielen. Ist dies nicht der Fall, so besteht die Gefahr, dass beim Melken der Milchschlauch vom Stutzen abrutscht. Ein einmal beim Melken abgerutschter Milchschlauch ist, lediglich mit einem erheblichen Montageaufwand auf den Stutzen zu montieren. Die Haftung ist im Wesentlichen durch die Materialpaarung Stutzen/Milchschlauch bestimmt, so dass die Wahlfreiheit der Konstruktionsmaterialien eingeschränkt ist.

Es sind Melkzeuge bekannt, bei denen das Zitzengummi und der Milchschlauch einteilig ausgebildet sind. Das Zitzengummi unterliegt einem Verschleiß, so dass ein Austausch der als Monoblock bekannten Ausgestaltung des einteiligen Zitzengummis mit dem Milchschlauch erforderlich ist, dass auch der Milchschlauch vom Milchsammelstück entfernt wird.

Durch die DE-A1-32 17 865 ist eine fluiddichte Schlauchverbindung in der Melktechnik bekannt, bei der ein Milchschlauch und eine Bohrung im Milchsammelstück eingesteckt wird. Der Rand der Bohrung bzw. Öffnung steht im Eingriff mit dem Milchschlauch. Um zu verhindern, dass der Milchschlauch durch die auf den Milchschlauch einwirkenden Kräfte nicht aus der Bohrung des Milchstücks herausgezogen wird, wird nach der DE-A1-32 17 865 vorgeschlagen, dass ein Element vorgesehen ist, welches mit einer oberhalb der Bohrung vorgesehenen Kante, auf die der Milchschlauch abgelegt werden kann und von der der Milchschlauch geklemmt wird, wobei das Element zusammen mit der Kante den Milchschlauch umgibt und diesen daran hindert, dass der Milchschlauch aus der Bohrung herausgezogen werden kann.

Durch die WO-A2-2007/022950 ist eine fluiddichte Schlauchverbindung in der Melktechnik bekannt, welche einen Anschlussstutzen und einen Endbereich eines Schlauches zur Verbindung mit dem Anschlussstutzen einer Komponente eines Melksystems aufweist, wobei wenigstens ein Halteelement und wenigstens eine zum Halteelement korrespondierend ausgebildete Haltekontur vorgesehen sind. Durch die Ausgestaltung des Halteelementes und der Haltekontur wird eine formschlüssige Verbindung zwischen dem Schlauch und dem Anschlussstutzen erreicht. Das Halteelement und die Haltekontur sind dabei so ausgebildet, dass durch die auf die Schlauchverbindung einwirkenden Kräfte die formschlüssige Verbindung nicht gelöst wird. Die formschlüssige Verbindung kann um eine kraftschlüssige Verbindung ergänzt sein. Durch den Formschluss zwischen dem Anschlussstutzen und dem Schlauch wird hierdurch eine erhöhte Betriebsdauer der Schlauchverbindung erreicht, da keine permanente Kraftschlussverbindung und somit eine dauerhafte Belastung des Schlauchs entsteht. Darüber hinaus wird durch eine geringe Vorspannung, mit der der Schlauch auf den Anschlussstutzen befestigt wird, die Ozonrissneigung des Milchschlauchs deutlich reduziert.

Hiervon ausgehend liegt der vorliegenden Erfindung zu Aufgabe zugrunde, die Verbindung zwischen einem Milchschlauch und einem Milchsammelstück und/oder einem Melkbecher weiter zu entwickeln, um die Handhabung der Schlauchverbindung, zu vereinfachen sowie die auf die Schlauchverbindung wirkenden Kräfte zu verringern.

Diese Aufgabe wird erfindungsgemäß durch eine Melkeinheit mit den Merkmalen des kennzeichnenden Teils des Anspruchs 1 gelöst.Vorteilhafte Weiterbildungen und Ausgestaltungen sind Gegenstand der Unteransprüche.

Der erfinderischen Lösung liegt die Überlegung zugrunde, die Funktionen Dichten und Verbinden getrennt zu realisieren. Hierzu wird bei einer Melkeinheit umfassend mehrere einen Milchschläuche, welche jeweils einen ersten Endabschnitt und einen zweiten Endabschnitt aufweisen, und ein Milchsammelstück, das mit den ersten Endabschnitten der Milchschlauchs verbunden ist, vorgeschlagen, dass das Milchsammelstück Kupplungselemente aufweist, die jeweils mit dem ersten Endabschnitt eines Milchschlauchs zusammenwirkten, und dass Klemmelement vorgesehen sind, welche so mit den Kupplungselementen zusammenwirkten, dass eine im Wesentlichen fluiddichte Verbindung zwischen dem Milchschlauch und dem Milchsammelstück entsteht, wobei die Klemmelemente eine Klemmeinheit bilden, welche mit dem Milchsammelstück lösbar verbunden sind.

Durch Lösen der Klemmeinheit können sämtliche Verbindungen zwischen den Melkschläuchen und dem Milchsammelstück gelöst werden.

Nach einem weiteren erfinderischen Gedanken wird eine Melkeinheit umfassendmehrere Milchschläuche, welche jeweils einen ersten Endabschnitt und einen zweiten Endabschnitt aufweisen, ein Milchsammelstück, das mit den ersten Endabschnitten der Milchschläuche verbunden ist, und Melkbecher, welche ein Zitzengummi und eine Melkbecherhülse aufweisen, wobei jeweils ein Melkbecher mit dem zweiten Endabschnitt eines Milchschlauchs verbunden ist, vorgeschlagen. Die erfindungsgemäße Melkeinheit zeichnet sich dadurch aus, dass das Milchsammelstück erste Kupplungselemente aufweist, welche jeweils mit dem ersten Endabschnitt eines Milchschlauchs zusammenwirkten, und dass erste Klemmelemente vorgesehen sind, welche so mit den ersten Kupplungselementen zusammenwirken, dass eine im Wesentlichen fluiddichte Verbindung zwischen den Milchschläuchen und dem Milchsammelstück entsteht. Darüber hinaus weisen die Melkbecher zweite Kupplungselemente auf, welche jeweils mit dem zweiten Endabschnitt eines Milchschlauchs zusammenwirkten. Es sind zweites Klemmelemente vorgesehen, welches so mit den zweiten Kupplungselementen zusammenwirkten, dass eine im Wesentlichen fluiddichte Verbindung zwischen den Milchschläuchen und den Melkbechern entsteht.

Besonders bevorzugt ist eine Ausgestaltung, bei der das Kupplungselement im Wesentlichen kegelstumpfförmig ausgebildet ist und vorzugsweise in den ersten bzw. zweiten Endabschnitt des Milchschlauchs hineinragt. Durch diese vorteilhafte Weiterbildung der Melkeinheit wird eine definierte Dichtfläche am Kupplungselement bereitgestellt. Das Kupplungselement kann auch als Dichtelement ausgebildet sein. Durch die kegelstumpfförmige Ausgestaltung des Kupplungselementes wird auch eine Selbstzentrierung des Milchschlauchs am Kupplungselement erreicht, wenn dieser über das Kupplungselement gestülpt wird. Durch das Klemmelement wird auf den Milchschlauch eine Kraft ausgeübt, so dass eine fluiddichte sowie mechanisch stabile Verbindung entsteht.

Besonders bevorzugt ist eine Ausgestaltung der Melkeinheit, die sich dadurch auszeichnet, dass beabstandet zur Basis des kegelstumpfförmigen Kupplungselementes eine diese umgebende, sich über wenigstens einen Teil der axialen Länge des Kupplungselementes erstreckende Wand vorgesehen ist. Die Wand umgibt vorzugsweise vollumfänglich den Kegelstumpf, so dass der Milchschlauch vorzugsweise zwischen der Wand und dem Kegelstumpf eingeklemmt wird.

Besonders bevorzugt ist dabei eine Ausgestaltung, bei der das Klemmelement mit der Wand kraft- und/oder formschlüssig verbindbar ist.

Es besteht auch die Möglichkeit, dass die Wand in Form von Segmenten ausgebildet ist, welche elastisch sind, so dass diese bei einer entsprechenden Ausgestaltung beispielsweise eines Gewindes in Richtung des Endabschnittes des Milchschlauchs und gegen diesen gedrückt werden, so dass eine Klemmverbindung zwischen dem Kupplungselement und dem Milchschlauch erreicht wird.

Gemäß einer noch weiteren vorteilhaften Ausgestaltung der Melkeinheit wird vorgeschlagen, dass der erste und/oder zweite Endabschnitt des Milchschlauchs eine zum Kupplungselement entsprechend ausgebildete Innenform aufweist.

Nach einer noch weiteren vorteilhaften Ausgestaltung der Melkeinheit wird vorgeschlagen, dass der erste und/oder der zweite Endabschnitt des Milchschlauchs wenigstens eine Nut aufweist, in die ein Kragen des Klemmelementes eingreift. Hierdurch wird sichergestellt, dass durch Zugbeanspruchung des Milchschlauchs dieser nicht vom Klemmelement bzw. Kupplungselement abgezogen werden kann.

Besonders bevorzugt ist eine Ausgestaltung einer Melkeinheit, bei der der erste und/oder der zweite Endabschnitt des Milchschlauchs elastische Segmente aufweist. Diese elastischen Segmente dienen als Dichtmittel.

Zu einer noch weiteren Verbesserung der Schlauchverbindung wird gemäß einer noch weiteren vorteilhaften Ausgestaltung der Melkeinheit vorgeschlagen, dass das Klemmelement wenigstens ein in radialer Richtung elastisches Segment aufweist.

Die Dichtigkeit zwischen dem Milchschlauch und dem Milchsammelstück bzw. einem Melkbecher kann auch dadurch weiter verbessert werden, dass der erste und/oder zweite Endabschnitt des Milchschlauchs einen Adapter aufweist. Das Abdichten erfolgt durch ein axiales Andrücken des Adapters an das Milchsammelstück bzw. an den Melkbecher.

Zur Vereinfachung der Montage des Klemmelementes wird vorgeschlagen, dass das Klemmelement einen Durchgang aufweist, durch den sich der Milchschlauch hindurch erstreckt, wobei das Klemmelement einen Schlitz aufweist, durch welchen ein Abschnitt des Milchschlauchs durchführbar ist. Durch diese Maßnahme kann beispielsweise durch Zusammendrücken des Milchschlauchs dieser durch den Schlitz in das Klemmelement eingeführt werden, so dass sich der Milchschlauch durch den Durchgang hindurch erstreckt.

Der Milchschlauch für eine Melkeinheit ist mit zwei gegenüberliegenden Endabschnitten und einem Zwischenbereich ausgebildet, wobei alle Bereiche einteilig miteinander verbunden sind und der Zwischenbereich aus einem weichen Werkstoff gefertigt ist. Weiterhin ist zumindest ein Endabschnitt wenigstens teilweise aus wenigstens einem harten Werkstoff gefertigt.

Ein weicher Werkstoff kann dabei beispielsweise ein elastisch verformbarer Werkstoff wie Gummi, TPE oder Silikone sein. Hierzu können insbesondere auch solche elastischen Komponenten verwendet werden, welche eine lebensmitteltechnische Zulassung zum Einsatz in Melkeinheiten besitzen.

Unter einem harten Werkstoff wird im Rahmen der vorliegenden Erfindung insbesondere ein nichtelastischer Werkstoff verstanden. Dies kann beispielsweise ein metallischer Werkstoff sein oder aber auch ein unter üblichen Raumtemperaturen fester Kunststoff. Dies sind insbesondere feste Thermoplaste (TP). Beispiele für derartige Thermoplaste sind Polyethylen (PE), Polystyrol (PS), Polyvinylchlorid (PVC) und Polyamid (PA).

Durch die Verwendung von unterschiedlichen Werkstoffen an einem Milchschlauch wird die Möglichkeit, diesen so zu gestalten, dass er einerseits besonders leicht mit einem Melkbecher oder am anderen Ende mit einem Milchsammelstück zu verbinden ist. Gleichzeitig wird durch die Ausbildung des Zwischenbereichs aus dem weichen Werkstoff erreicht, dass der Milchschlauch nach wie vor sehr beweglich ist und den Einsatz hierdurch erleichtert. Mit Hilfe eines Endabschnitts, der aus einem festen Werkstoff gefertigt ist, können die Endabschnitte der Milchschläuche so gestaltet werden, dass sie an die zu verbindenden Bereiche der Melkeinheit angeschlossen werden können. Wahlweise kann dabei ein Endabschnitt oder auch beide Endabschnitte aus dem harten Werkstoff gefertigt sein. In diesem Fall ist es möglich, mit einem erfindungsgemäßen Milchschlauch eine Verbindung, beispielsweise zwischen einem Milchsammelbehälter und einem Melkbecher zu schaffen, wobei der Milchschlauch an beiden Enden speziell ausgebildete Endabschnitte aufweist, welche besonders zum Anschluss an die jeweiligen Milchsammelbehälter und Melkbecher der Melkeinheit ausgebildet sind.

Dazu ist vorteilhafterweise vorgesehen, dass der wenigstens eine Endabschnitt Verbindungsmittel zum Anschluss an einen Melkbecher oder Milchsammelbehälter aufweist. Wie bereits zuvor erläutert, handelt es sich hierbei um eines der wesentlichen Einsatzgebiete für einen erfindungsgemäßen Milchschlauch. Die Verbindung von Melkbecher und Milchsammelbehälter stellt eine besonders stark belastete Zone innerhalb der Melkeinheit dar, weshalb die an dieser Stelle eingesetzten Milchschläuche relativ häufig auszutauschen und/oder zu reinigen sind. Mit Hilfe der am Milchschlauch ausgebildeten Verbindungsmittel, welche durch den harten Werkstoff in den Endabschnitten ausgebildet sind, kann der Milchschlauch jedoch nun besonders einfach, zeitsparend und bedienerfreundlich montiert oder getauscht werden. Hierdurch wird zum Einen die Wartung der Anlage im laufenden Betrieb spürbar erleichtert. Andererseits können die Milchschläuche aber auch häufiger gewechselt und beispielsweise einer Reinigung zugeführt werden, was im Vergleich zu bisher im Stand der Technik bekannten Milchschläuchen mit einem erheblich reduzierten Arbeitsaufwand geschehen kann.

Ganz besonders vorteilhaft ist es dabei, wenn die Verbindungsmittel zumindest teilweise formschlüssig ausgebildet sind und insbesondere Rastmittel umfassen. Hierdurch wird eine Art Steckverbindung zwischen dem Milchschlauch und den angrenzenden Komponenten der Melkeinheit geschaffen. Diese kann einseitig oder beidseitig des Milchschlauchs ausgebildet sein. Insbesondere vorteilhaft ist im Rahmen der vorliegenden Erfindung eine Ausbildung des Verbindungsmittels als Rastverbindung, welche den Milchschlauch an einem Melkbecher und/oder Milchsammelbehälter befestigt. Ein Austausch oder eine Entnahme des Milchschlauchs erfordert lediglich noch das Lösen des Rastmittels und der Milchschlauch kann entnommen werden.

Eine von der Erfindung ganz besonders bevorzugte Ausführungsform sieht vor, dass der Endabschnitt des Milchschlauchs Befestigungsmittel zum Anschluss eines Zitzengummis aufweist. Mit Hilfe eines solchen Befestigungsmittels kann der Milchschlauch mit einem Zitzengummi zunächst verbunden und danach als einteilige Baugruppe in der Melkeinheit montiert werden. Bei der Montage oder Wartung von Melkeinheiten ergibt sich hieraus ein gravierender Vorteil durch die stark vereinfachte Montage. Der Milchschlauch kann nämlich bei erfindungsgemäßer Ausgestaltung zunächst mit dem Zitzengummi über das Befestigungsmittel verbunden werden. Erst danach wird das lose Ende des Milchschlauches, etwa durch den Melkbecher in Milchflußrichtung durchgeführt, und das Zitzengummi, welches am gegenüberliegenden Endabschnitt des Milchschlauches angebunden ist, wird zusammen mit dem Milchschlauch in den Melkbecher hineingezogen. Ein umständliches Einfädeln der einzelnen Bauteile, wie es bei mehrteiligen Milchschläuchen und Zitzengummis bisher im Stand der Technik erforderlich war, entfällt damit. Die vorliegende Erfindung kombiniert damit die Vorteile von einteiligen Milchschläuchen mit angeformtem Zitzengummi mit den Vorteilen von mehrteiligen Milchschläuchen, bei denen Zitzengummis und kurze Milchschläuche bislang getrennt zu montieren waren.

Für eine fehlerfreie Montage ist es zudem vorteilhaft, wenn Positioniermittel zum Positionieren von Zitzengummi und Milchschlauch zueinander und/oder zum Melkbecher vorgesehen sind. Zitzengummis, welche etwa tordiert in einem Melkbecher angebracht werden, haben sich in der Vergangenheit des Öfteren als mögliche Fehlerquelle erwiesen. Aus diesem Grunde sieht die Erfindung Positioniermittel vor, welche dafür sorgen, dass das Zitzengummi die korrekte Relativlage in Bezug auf den Melkbecher einnimmt. Hierzu können beispielsweise unter einem Kragen des Zitzengummis Stege vorgesehen sein, welche in komplementär ausgeformte Nuten in der Außenwand des Melkbechers eingesteckt werden, und so eine Verdrehsicherung um die Längsachse des Melkbechers bilden. Eine ähnliche Verdrehsicherung kann selbstverständlich auch zwischen dem Milchschlauch und dem Melkbecher vorgesehen sein. Alternativ ist es aber auch möglich, alleine oder zusätzlich zu anderen Positioniermitteln ein Positioniermittel zwischen Zitzengummi und Milchschlauch vorzusehen, so dass diese nur in einer bestimmten Stellung miteinander verbindbar sind. Durch die Verwendung von Positioniermitteln an den drei Kontaktstellen, d. h. zwischen Zitzengummi und Melkbecher, zwischen Melkbecher und Milchschlauch sowie zwischen Milchschlauch und Zitzengummi, ist es möglich eine korrekte Montage der Bauteile sicherzustellen. Dabei kann im einfachsten Fall ein Positioniermittel nur an einer der Kontaktstellen vorgesehen sein.

Für eine einfache und zuverlässige Ausgestaltung des Milchschlauches ist es weiterhin vorteilhaft, wenn der wenigstens eine harte Werkstoff wenigstens teilweise an einem Außenumfang des Milchschlauchs angeordnet ist. Hierdurch kann beispielsweise an der Innenseite des Milchschlauchs die Leitung der Milch über nur eine einzige Art von Werkstoff erfolgen. Das heißt, die Milch kommt dabei im Fluss durch den Milchschlauch nur mit diesem einen Werkstoff in Kontakt, was aus lebensmitteltechnischer Sicht eine besondere Vereinfachung darstellt. Weiterhin kann durch die Verlagerung der Grenzflächen zwischen dem harten und weichen Werkstoff an den Außenseiten des Milchschlauchs eine höhere Widerstandsfähigkeit bezüglich Undichtigkeiten erreicht werden. Keine der Grenzflächen zwischen den beiden Werkstoffen setzt sich nämlich in diesem Fall von der Außenseite bis an die Innenseite des Milchschlauches fort. Insbesondere wenn der harte Werkstoff einen hülsenförmigen Endabschnitt bildet, welcher den weichen Werkstoff umschließt, kann dieser gleichzeitig als Verbindungs- bzw. Befestigungsmittel dienen und den aus dem weichen Werkstoff bestehenden Zwischenbereich zusätzlich schützend umschließen.

Vorteilhafterweise ist der weiche Werkstoff ein Elastomer, wie etwa ein Flüssigsilikon (LSR), ein thermoplastisches Elastomer (TPE), ein Gummi oder ein festes Silikon (HTV). Diese Werkstoffe sind neben anderen elastischen und lebensmitteltechnisch zugelassenen Werkstoffen relativ preiswert verfügbar, technisch sehr gut zu verarbeiten und in ihren Eigenschaften bekannt.

Dem gegenüber ist der harte Werkstoff vorzugsweise ein Thermoplast, wie beispielsweise Polyethylen, Polystyrol, Polyvinylchlorid oder Polyamid. Solche thermoplastischen Kunststoffe sind bei Raumtemperatur fest und lassen sich gleichzeitig mittels bekannter Verfahren zum Herstellen von Werkstücken aus mehreren Komponenten verarbeiten. Es kann sich dabei zum Beispiel um ein Zwei-Komponenten-Spritzgießverfahren handeln.

Eine andere bevorzugte Ausführungsform sieht vor, dass die Verbindungsmittel und die Befestigungsmittel am Außenumfang des Milchschlauchs angeordnet sind. Auch bei dieser Ausführungsform ist es möglich, den aus einem weichen Werkstoff gefertigten Zwischenbereich über die gesamte Schlauchlänge auszubilden, wobei auch hierbei die Milch nur mit einem einzigen Werkstoff in Kontakt tritt. Die Kombination von Verbindungsmitteln und Befestigungsmitteln am Außenumfang des Milchschlauches erlaubt es dem Milchschlauch einerseits mit einer der Komponenten der Melkeinheit, wie beispielsweise dem Milchsammelbehälter oder dem Melkbecher zu verbinden und andererseits über ein Befestigungsmittel das Zitzengummi mit dem Milchschlauch zu verbinden, so dass beide zusammen beispielsweise in den Melkbecher eingeführt und unter Aktivierung der Verbindungsmittel dort sicher montierbar sind.

Eine weitere vorteilhafte Ausführungsform sieht vor, dass wenigstens ein Bereich abgewinkelt ist. Dies ist insbesondere an der vom Melkbecher entfernt liegenden Seite des Milchschlauchs vorteilhaft, wobei diese Seite in der Regel in einen Milchsammelbehälter mündet. Aufgrund der Anatomie der Tiere werden die Milchschläuche aus unterschiedlichen Richtungen kommend an einem Milchsammelbehälter zusammengeführt. Aus diesem Grunde treffen sie unter einem gegenüber der vertikalen Richtung geneigten Winkel auf den Milchsammelbehälter. Genau dieser Auftreffwinkel kann mittels eines abgewinkelten Endabschnittes nachgebildet werden, wodurch der Milchschlauch an dieser Stelle keine weitere Verformung ausführen muss und geschont wird. Darüber hinaus werden in die Zitze im Wesentlichen keine Drehmomente eingeleitet. Weiterhin ist es vorteilhaft, wenn der Milchschlauch um eine annähernd vertikale Drehachse, relativ zum Milchsammelbehälter drehbar gelagert ist. So kann sich der Milchschlauch selbsttätig an unterschiedliche Zitzenstellungen anpassen oder durch einfaches manuelles Verdrehen angepasst werden.

Für einen einwandfreien Betrieb einer Melkeinheit ist es notwendig, den Milchschlauch zu belüften. Aus diesem Grunde ist vorzugsweise vorgesehen, dass wenigstens ein Endabschnitt eine Belüftungseinrichtung aufweist, die vorzugsweise Luft in Milchflußrichtung einleitet und im Bereich des Melkbechers angeordnet ist. Bei einer Ausführung des Milchschlauches aus zwei unterschiedlichen Werkstoffen ist es möglich, die Belüftungseinrichtung insbesondere in dem harten Werkstoff auszubilden. Dazu bietet sich insbesondere der aus dem harten Werkstoff gefertigte Endabschnitt des Milchschlauches an. Im Gegensatz zu bekannten Belüftungseinrichtungen von Milchschläuchen können so separate Bauteile entfallen und die Belüftungseinrichtung ist kostengünstiger darstellbar. Die Belüftungseinrichtung kann dabei bei Bedarf an allen Bereichen des Milchschlauches angeordnet sein. Besonders bevorzugt werden aber Ausführungsformen, bei denen die Belüftungseinrichtung im Bereich des Melkbechers angeordnet ist. Insbesondere solche Belüftungseinrichtungen werden bevorzugt, welche Luft in einer Richtung zuführen, welche im Wesentlichen mit der Flußrichtung der gemolkenen Milch übereinstimmt.

Bevorzugt wird das Verbindungsmittel gemäß der vorliegenden Erfindung als Paarung zweier harter Werkstoffe ausgebildet. Auf diese Weise kann beispielsweise der aus dem harten Werkstoff gefertigte Endabschnitt des Milchschlauches, über eine Rastverbindung welche das Verbindungsmittel darstellt, mit einem aus Metall gefertigten Melkbecher verbunden werden.

An anderer Stelle ist es vorteilhaft, das Befestigungsmittel als Paarung eines harten und eines weichen Werkstoffes auszubilden. Durch diese Hart-Weich-Paarung von Werkstoffen ist es möglich, eine besonders gut dichtende Verbindung zwischen dem aus dem harten Werkstoff gefertigten Endabschnitt des Milchschlauches und einem aus einem weichen Werkstoff gefertigten Zitzengummi zu erhalten.

Ganz besonders vorteilhaft ist es, wenn die Verbindungsmittel und die Befestigungsmittel nebeneinander an einem gemeinsamen Abschnitt des Milchschlauchs angeordnet sind. Hierdurch ist es möglich, dass sich Verbindungsmittel und Befestigungsmittel eine einzige Anlagefläche am Außenumfang des Milchschlauches, welcher aus dem harten Werkstoff gefertigt ist, teilen. Beide Befestigungsmittel schaffen also eine Anlage an diese Außenumfangsfläche. Insbesondere wenn der aus dem harten Werkstoff gefertigte Endabschnitt eine Aufweitung in radialer Richtung zu dem Schlauchende hin aufweist, ist es möglich, mit dieser Aufweitung ein darauf befestigtes Zitzengummi in einen Melkbecher hineinzuziehen und anschließend den Zitzengummi gegen den Boden des Melkbechers zu drücken. Die so erreichte Stellung wird dann mittels der vorgesehenen Rastmittel beibehalten, so dass sich durch einfaches Einziehen des Milchschlauchs bis zum Anschlag, d. h. dem Eingreifen der Rastmittel, der Melkbecher mit dem darin montierten Zitzengummi nebst angeschlossenem Milchschlauch sehr einfach montieren läßt.

Die erfindungsgemäße Melkeinheit, auf welche sich die Erfindung ferner bezieht, weist eine Mehrzahl von Melkbechern auf, in denen Zitzengummis angeordnet sind. Die Zitzengummis sind über Milchschläuche an einen Milchsammelbehälter angeschlossen, wobei die Milchschläuche nach Art der vorliegenden Erfindung ausgebildet sind. Ein solches erfindungsgemäßes Melkzeug kann, wie bereits zuvor erwähnt, besonders einfach hergestellt und in Stand gehalten werden. Mit den Milchschläuchen ist das Austauschen von Milchschläuchen und Zitzengummis wesentlich einfacher und schneller geworden. Zudem können Milchschläuche auch zu Reinigungszwecken zusammen mit den Zitzengummis in einfacher Weise entnommen und wieder montiert werden. Dies erfordert weder einen hohen Kraftnoch einen besonders hohen Zeitaufwand.

Somit ist ein erheblicher Vorteil im Hinblick auf den Wartungsaufwand und die mögliche erreichbare Hygiene erzielt worden. Zudem ist es ressourcenschonend, wenn ein Quasi-Monoblock aus zwei unterschiedlichen Werkstoffen geschaffen wird, der sich wie ein Monoblock verbauen lässt. So kann beispielsweise der Milchschlauch aus einem besonders langlebigen Silikon und das Zitzengummi aus einem Gummi gefertigt sein. Dabei kann das verschlissene Zitzengummi getrennt getauscht und der Milchschlauch weiterverwendet werden. Demgegenüber ist es bei bisherigen Monoblock-Gestaltungen, bei denen Milchschlauch und Zitzengummi einteilig und aus einem Werkstoff gefertigt sind, erforderlich den jeweils anderen Abschnitt mit zu entsorgen, wenn ein Abschnitt verschlissen ist.

Weitere Vorteile und Einzelheiten der Erfindung werden anhand der in der Zeichnung dargestellten Ausführungsbeispiele erläutert, ohne dass der Gegenstand der Erfindung auf diese konkreten Ausführungsbeispiele beschränkt wird. Es zeigen:
- Fig. 1:: in einer perspektivischen Ansicht ein Ausführungsbeispiel eines Kupplungselementes,
- Fig. 2:: perspektivisch und schematisch ein Ausführungsbeispiel einer Melkeinheit,
- Fig. 3:: in einer perspektivischen Ansicht die Anordnung eines Endabschnittes eines Milchschlauchs am Kupplungselement,
- Fig. 4:: schematisch und in einer perspektivischen Ansicht ein Ausführungsbeispiel eines Endabschnittes eines Milchschlauchs,
- Fig. 5:: ein Ausführungsbeispiel eines Kupplungselementes und eines Klemmelementes am Milchsammelstück,
- Fig. 6:: einen Abschnitt eines Milchschlauchs in einer Schnittansicht mit einem Adapter,
- Fig. 7:: ein Ausführungsbeispiel eines Klemmelementes,
- Fig. 8:: schematisch und in einer Schnittdarstellung eine Verbindung eines Milchschlauchs mit einem Milchsammelstück,
- Fig. 9:: eine Draufsicht der Verbindung nach Fig. 8,
- Fig. 10:: perspektivisch ein Klemmelement,
- Fig. 11:: einen Endabschnitt des Milchschlauchs nach Fig. 8 in einer perspektivischen Ansicht,
- Fig. 12:: perspektivisch ein Kupplungselement,
- Fig. 13:: schematisch und im Schnitt eine Darstellung einer Verbindung zwischen einem Milchschlauch und einem Milchsammelstück,

- Fig. 14:: die Draufsicht der Verbindung nach Fig. 13,
- Fig. 15:: das Klemmelement der Verbindung nach Fig. 13 in einer perspektivischen Ansicht,
- Fig. 16:: den Endabschnitt eines Milchschlauchs nach Fig. 13 in einer perspektivischen Ansicht,
- Fig. 17:: in einer perspektivischen Ansicht ein Kupplungselement der Verbindung nach Fig. 13 in einer perspektivischen Ansicht,
- Fig. 18:: ein weiteres Ausführungsbeispiel in einer Schnittdarstellung einer Milchschlauchverbindung mit einem Milchsammelstück,
- Fig. 19: in einer Schnittdarstellung ein noch weiteres Ausführungsbeispiel einer Milchschlauchverbindung und
- Fig. 20: einen axialen Längsschnitt durch einen Milchschlauch, wobei hier kein Ausführungsbeispiel der beanspruchten Erfindung dargestellt ist.

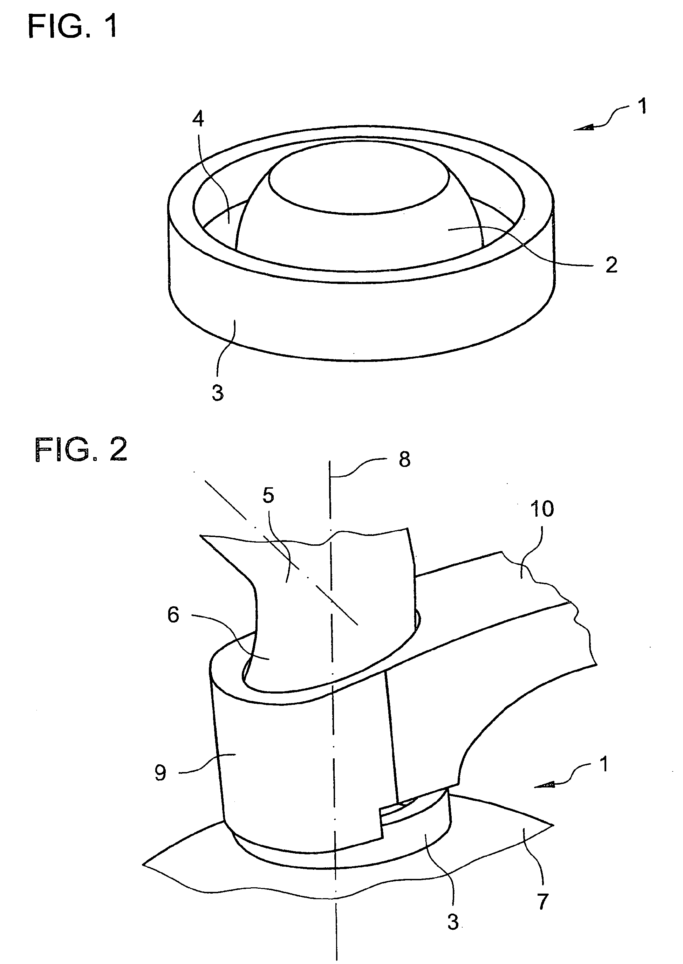

In der Fig. 1 ist ein Kupplungselement 1 in einer perspektivischen Ansicht dargestellt. Das dort dargestellte Kupplungselement 1 kann am Milchsammelstück und/oder Melkbecher ausgebildet sein. Am Melkbecher kann das Kupplungselement entweder am Zitzengummi oder an einer Melkbecherhülse vorgesehen sein. Das Kupplungselement kann ein integraler Bestandteil beispielsweise eines Deckels eines Milchsammelstücks sein.

Obwohl im Nachfolgenden im Wesentlichen die Verbindung eines Milchschlauchs mit einem Milchsammelstück beschrieben ist, kann eine Verbindung auch zwischen einem Melkbecher und einem Milchschlauch entsprechend ausgebildet sein.

Das Kupplungselement 1 weist einen kegelstumpfförmigen Abschnitt 2 auf. Der kegelstumpfförmige Abschnitt 2 ist so ausgebildet, dass dieser in einen Endabschnitt eines Milchschlauchs einbringbar ist.

Beabstandet zur Basis des kegelstumpfförmigen Kupplungselementes 1 ist eine den kegelstumpfförmigen Abschnitt 2 umgebende Wand 3 vorgesehen. Die Wand 3 ist über einen Boden 4 mit dem kegelstumpfförmigen Abschnitt 2 verbunden. Der Abstand zwischen der Wand 3 und dem kegelstumpfförmigen Abschnitt 2 ist im Bereich des Bodens 4 so gewählt, dass vorzugsweise dieser etwas geringer ist, als die Wanddicke des Milchschlauchs, der in den Hohlraum zwischen dem kegelstumpfförmigen Abschnitt 2 und dem Boden 4 und der Wand 3 eingebracht wird.

Die Wand 3 kann am Außenumfang beispielsweise ein Gewinde oder andere Verbindungsmittel aufweisen, welche dazu geeignet und bestimmt sind, die Wand 3 mit einem Klemmelement zu verbinden. Hierbei kann es sich um eine kraft- und/oder formschlüssige Verbindung handeln. Beispielhaft wird eine Bajonettverbindung genannt. Es besteht auch die Möglichkeit, dass zwischen dem nicht dargestellten Klemmelement und dem Kupplungselement eine Rastverbindung ausgebildet wird.

Fig. 2 zeigt ein Ausführungsbeispiel einer Melkeinheit umfassend einen Milchschlauch 5, der einen ersten Endabschnitt 6 aufweist. In dem dargestellten Ausführungsbeispiel ist der erste Endabschnitt 6 des Milchschlauchs 5 gekröpft ausgebildet, so dass der Milchschlauch unter einem vorgegebenen Winkel vom Milchsammelstück 7 absteht. Der Milchschlauch 5 kann durch Verschwenken um die Achse 8 positioniert werden. Insbesondere besteht die Möglichkeit, dass der Abstand der nicht dargestellten zweiten Endabschnitte der benachbarten Milchschläuche durch entsprechendes Verschwenken wenigstens eines Milchschlauchs um eine Achse 8 variiert werden kann. Hierdurch kann beispielsweise eine Anpassung an die zu melkende Aufgabe erfolgen. Ist das Milchsammelstück beispielsweise mit vier Milchschläuchen verbunden, so kann der Abstand eines Paares der Milchschläuche zueinander anders sein als der Abstand des anderen Paares der Milchschläuche.

Der Endabschnitt 6 des Milchschlauchs 5 ragt in den durch die Wand 3, den kegelstumpfförmigen Abschnitt 2 und den Boden 4 des Kupplungselementes 1 begrenzten Raum hinein. Zur Festlegung des Milchschlauchs 5 am Kupplungselement 1, welches entsprechend der Fig. 1 ausgebildet ist, ist ein Klemmelement 9 vorgesehen. Das Klemmelement 9 ist mit einem Arm 10 verbunden, der mit dem Milchsammelstück verbunden ist, so dass das Kupplungselement 1 nicht zwingend und das Klemmelement 9 keine unmittelbare Verbindung mechanischer Art aufweisen. Das Milchsammelstück 7 kann mit weiteren Milchschläuchen entsprechend der Fig. 2 verbunden sein. Sind mehrere Milchschläuche 5 mit dem Milchsammelstück 7 verbunden, so weist vorzugsweise jedes Klemmelement 9 jeweils einen Arm 10 auf, die miteinander verbunden sind, so dass die Arme 10 und die Klemmelemente 9 eine Klemmeinheit bilden, die beispielsweise über ein zentrales Verbindungselement mit dem Milchsammelstück verbunden wird. Durch Lösen des zentralen Verbindungselementes können sämtliche Verbindungen zwischen den Milchschläuchen und dem Milchsammelstück gelöst werden.

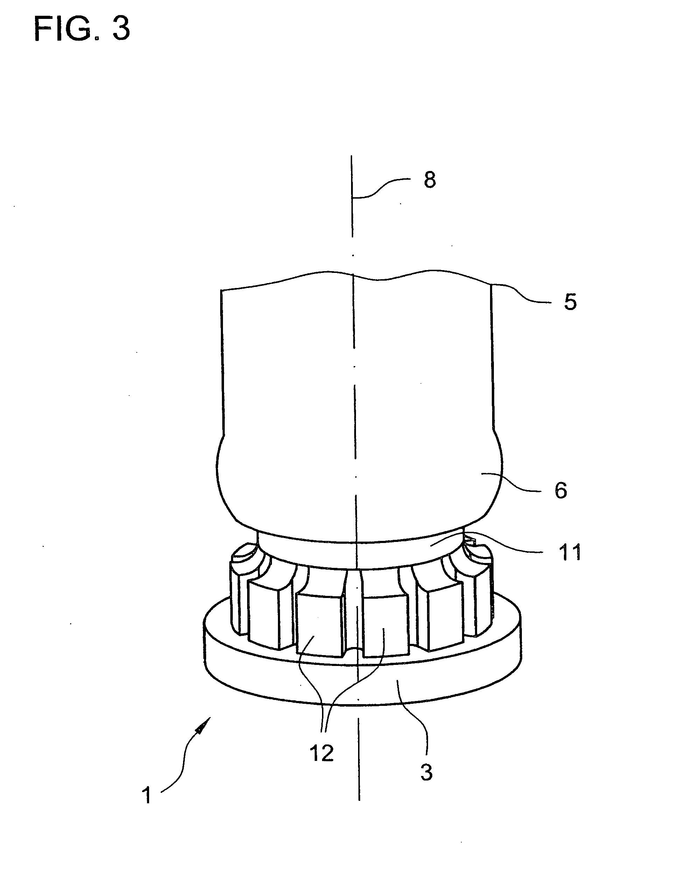

Aus der Fig. 3 ist die Anordnung des ersten Endabschnittes 6 des Milchschlauchs 5 mit dem Kupplungselement 1 dargestellt, wobei der besseren Übersichtlichkeit wegen die Darstellung eines Milchsammelstücks 7 nicht erfolgte. Der erste Endabschnitt 6 des Milchschlauchs 5 weist eine umlaufende Nut 11 auf. In diese Nut 11 greift ein entsprechend ausgebildeter Kragen ein, der am Klemmelement 9 ausgebildet ist. Aus der Darstellung nach Fig. 3 ist ersichtlich, dass der unterhalb der Nut 11 liegende Abschnitt des Milchschlauchs 5 Segmente 12 aufweist, die voneinander getrennt sind. Die Segmente 12 sind elastisch. Sie liegen an der Innenseite der Wand 3 an. Wird durch das Klemmelement 9 eine in Richtung der Achse 8 und bezogen auf die Darstellung in der Fig. 3 nach unten gerichtete Kraft auf die Segmente 12 ausgeübt, so kommt es zu einer Verformung der Segmente 12, die zwischen dem Kupplungselement 1 und dem Klemmelement 9 ausreichende Klemmkraft erzeugen, so dass der Milchschlauch 5 festgelegt wird. Andererseits weist der Milchschlauch 5 eine an den kegelstumpfförmigen Abschnitt 2 des Kupplungselementes 1 angepasste Innenkontur auf, wodurch eine relativ große Dichtfläche zwischen dem Milchschlauch und dem Kupplungselement entsteht.

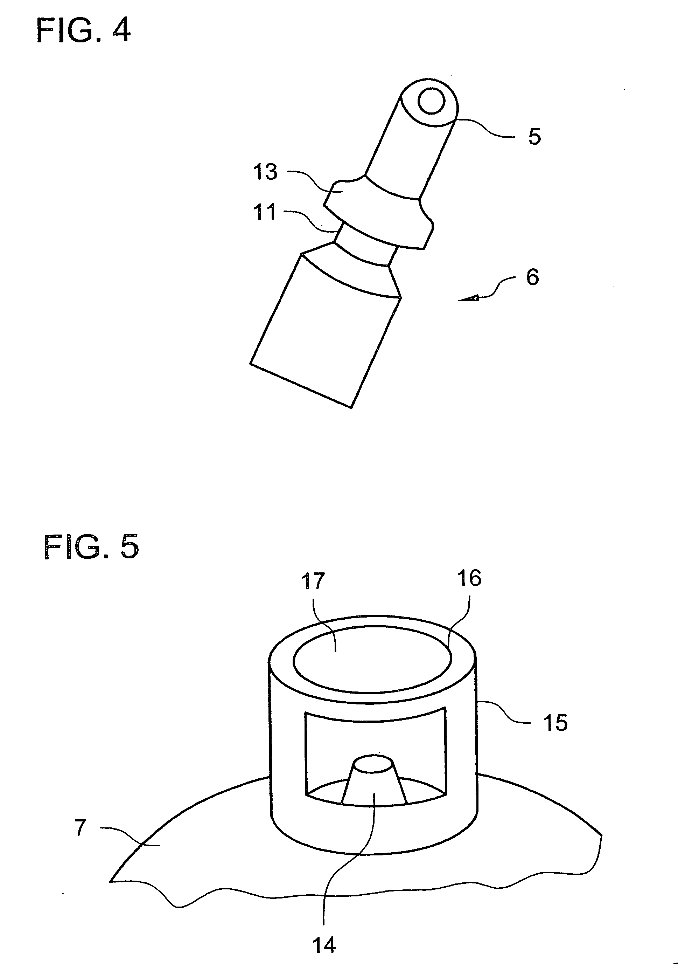

In der Fig. 4 ist ein zweites Ausführungsbeispiel eines Endabschnitts 6 eines Milchschlauchs 5 dargestellt. Der Milchschlauch 5 weist einen ersten Endabschnitt 6 auf, der einen vergrößerten Durchmesser aufweist. Innerhalb des ersten Endabschnittes 6 ist eine Nut 11 vorgesehen. Die Vergrößerung des Durchmessers des ersten Endabschnittes 6 erfolgt über eine kegelförmige Erweiterung 13.

Zur Festlegung des Milchschlauchs 5 am Milchsammelstück 7 weist dieser, wie aus der Fig. 5 ersichtlich ist, einen Fortsatz 14 auf. Der Fortsatz 14 ragt teilweise in den Endabschnitt 6 des Milchschlauchs 5 hinein. Der Fortsatz 14 bildet ein Kupplungselement. Im montierten Zustand ragt der Endabschnitt 6 in das Klemmelement 15 hinein, wobei der Rand 16 eine Durchgangsöffnung hat, in den die Nut 11 des ersten Endabschnitts 6 hineinragt. Das Klemmelement 15 ist vorzugsweise mit dem Milchsammelstück 7 verschraubt.

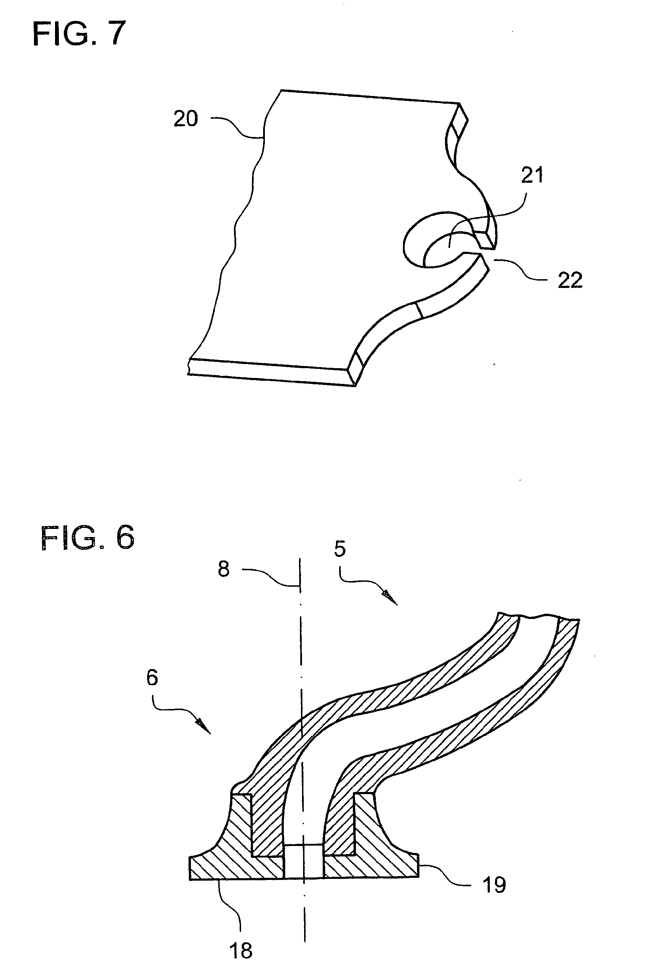

In der Fig. 6 ist ein S-förmig ausgebildeter Milchschlauch 5 dargestellt. Der erste Endbereich 6 des Milchschlauchs 5 weist einen Adapter 18 auf. Der Adapter 18 ist vorzugsweise aus einem sich vom Werkstoff des Milchschlauchs 5 unterscheidenden Werkstoff gebildet. Insbesondere ist der Adapter 18 aus einem gegenüber dem Werkstoff des Milchschlauchs 5 härteren Werkstoff gebildet. Der Adapter 18 und der Milchschlauch 5 sind vorzugsweise so ausgebildet, dass diese eine Baueinheit bilden. Die Herstellung dieser Baueinheit kann nach dem Mehrkomponenten-Spritzverfahren erfolgen. Der Adapter 18 umgibt den Mantel des Endabschnitts 6 des Milchschlauchs 5. Er weist einen Flansch 19 auf, der mit einem nicht dargestellten Kupplungselement zusammenwirkt. Zur Festlegung des Milchschlauchs 5 an einem Milchsammelstück und/oder einem Melkbecher ist ein Klemmelement 20 vorgesehen, welches in der Fig. 7 dargestellt ist. Das Klemmelement 20 weist eine Durchgangsbohrung 21 auf, welche den Adapter 18 im montierten Zustand umgibt. Zur Einbringung des Adapters 18 in die Durchgangsbohrung 21 ist ein Schlitz 22 vorgesehen. Der Schlitz 22 weist eine solche Breite auf, dass durch diesen ein Bereich zwischen den Endabschnitten des Milchschlauchs 5 hindurchführbar ist, wenn der Milchschlauch 5 zusammengedrückt wird, so dass dieser einen im Wesentlichen ellipsenförmigen Querschnitt aufweist. Das Klemmelement 20 kann unmittelbar oder mittelbar mit einem Milchsammelstück oder einem Melkbecher verbunden sein.

Durch die S-förmige Ausgestaltung des Milchschlauchs wird auch die Möglichkeit eröffnet, den Abstand zwischen zwei benachbarten Endabschnitten bzw. Melkbechern zu variieren. Dies kann durch Verschwenken wenigstens eines der benachbarten Milchschläuche um entsprechende Achsen 8 erfolgen.

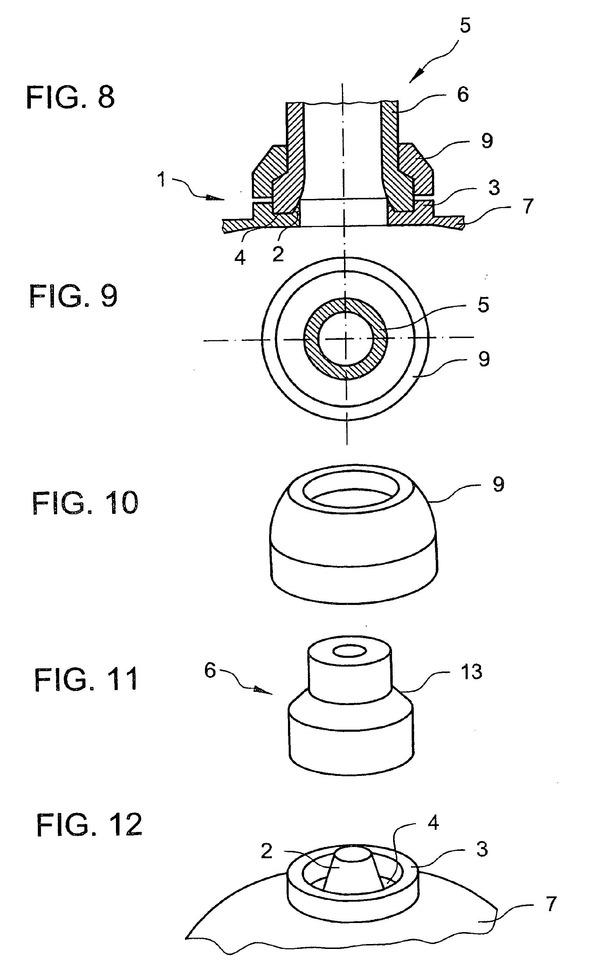

In der Fig. 8 ist eine Verbindung eines Milchschlauchs 5 im Schnitt dargestellt. Der Endabschnitt 6 des Milchschlauchs 5 weist einen sich konisch erweiternden Querschnitt auf. Die Mantelfläche des sich erweiternden Querschnitts liegt an der Fläche des kegelstumpfförmigen Abschnitts 2 eines Kupplungselementes 1 an. Der Randbereich des Abschnitts 6 liegt zwischen dem kegelstumpfförmigen Abschnitt 2 und einer Wand 3. Zur Festlegung des Abschnitts 6 des Milchschlauchs 5 ist ein Klemmelement 9 vorgesehen. Das Klemmelement 9 umgreift teilweise den sich erweiternden Endabschnitt 6, so dass das Klemmelement 9 den Endabschnitt 6 gegen den kegelstumpfförmigen Abschnitt 2 und die Innenseite der Wand 3 sowie den Boden 4 drückt. Aus der Darstellung nach Fig. 11 ist ersichtlich, dass der Endabschnitt 6 eine kegelförmige Erweiterung 13 aufweist, welche mit einer korrespondierende Ausformung des Klemmelementes 9 zusammenwirkt. Das Kupplungselement 1 ist in dem dargestellten Ausführungsbeispiel am Milchsammelstück 7 ausgebildet. Hierbei kann es sich beispielsweise um ein Gehäuseoberteil des Milchsammelstücks 7 handeln.

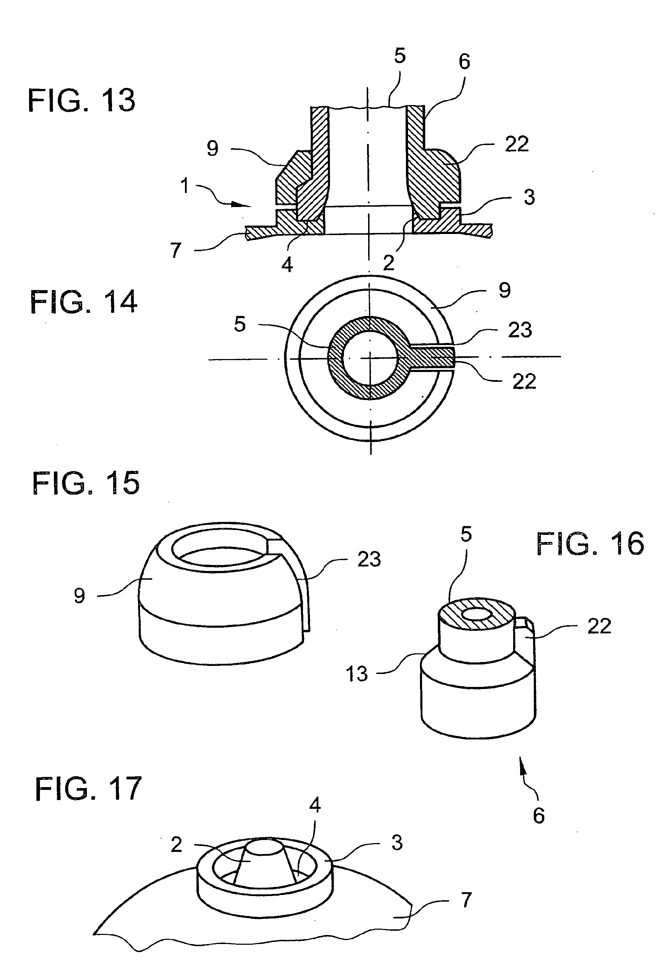

In den Fig. 13 bis 17 ist eine weitere Ausführungsform einer Verbindung zwischen einem Milchschlauch 5 und einem Milchsammelstück 7 dargestellt. Hierbei handelt es sich um eine Abwandlung der in den Fig. 8 bis 12 dargestellten Ausführungsform. Gleiche Teile sind mit gleichen Bezugszeichen versehen.

Der Unterschied zwischen den beiden Ausführungsformen besteht in der Ausgestaltung des Klemmelementes 9 sowie des Endabschnittes 6 des Milchschlauchs 5. Aus der Darstellung nach Fig. 15 ist ersichtlich, dass das Klemmelement 9 einen Schlitz 23 aufweist. Der Endabschnitt 6 weist eine in den Schlitz 23 im montierten Zustand hineinragende Nase 22 auf.

Der Schlitz 23 weist eine solche Breite auf, dass durch Zusammendrücken eines Bereichs zwischen den Endabschnitten des Milchschlauchs dieser durch den Schlitz 23 in das Klemmelement 9 einführbar ist. Der Schlitz 23 wirkt mit der Nase 22 als eine Positioniereinheit, so dass der Milchschlauch in einer definierten Lage bezüglich des Milchsammelstücks montierbar ist.

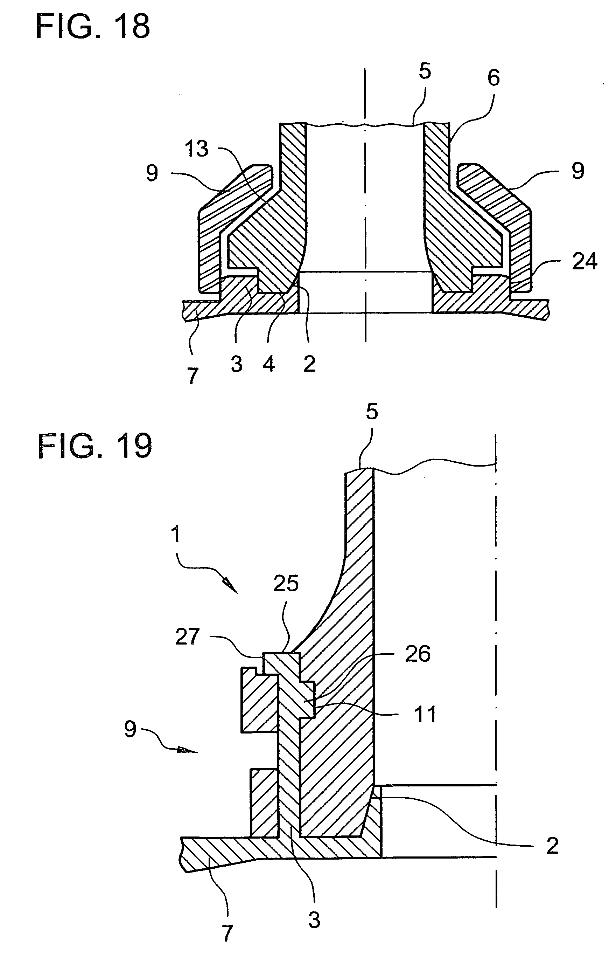

Fig. 18 zeigt eine zweite Abwandlung der Verbindung nach Fig. 8. Gleiche Bauteile sind mit gleichen Bezugszeichen versehen. In dem in der Fig. 18 dargestellten Ausführungsbeispiel ist an der Außenseite der Wand 3 und in der Innenseite des Klemmelementes 9 jeweils ein Gewinde vorgesehen, so dass das Klemmelement 9 mit dem Kupplungselement 1 verschraubbar ist.

In der Fig. 19 ist eine noch weitere Ausführungsform einer Verbindung zwischen einem Milchschlauch 5 und einem Milchsammelstück 7 dargestellt. Das Milchsammelstück 7 weist ein Kupplungselement 1 auf. Das Kupplungselement 1 umfasst einen kegelstumpfförmigen Abschnitt 2, der in den Milchschlauch 5 hineinragt. Beabstandet zum kegelstumpfförmigen Abschnitt 2 ist eine Wand 3 vorgesehen. Die Wand 3 ist in einzelne Stege 25 unterteilt, die in Richtung des Endabschnitts 6 des Milchschlauchs 5 elastisch verschwenkbar sind. Jeder Steg 25 weist einen Vorsprung 26 auf, der in eine im Endabschnitt 6 ausgebildete, vorzugsweise umlaufende Nut 11, eingreift. Zur Festlegung des Milchschlauchs 5 ist ein Klemmelement 9 vorgesehen, welches ringförmig die Stege 25 umgibt. Das Klemmelement 9 liegt an den Stegen 25 an. Die aneinander anliegenden Wandflächen sind vorzugsweise so ausgebildet, dass diese einen Keil bilden, so dass durch eine Verschiebung des Klemmelementes 9 in Richtung des freien Endes des Steges 25 dieser gegen den Endabschnitt 6 des Milchschlauchs gedrückt wird und am Steg 25 festgelegt wird. Zur Begrenzung der Bewegung in Richtung des freien Endes des Stegs 25 ist ein Anschlag 27 vorgesehen.

Die Verbindung kann dadurch gelöst werden, dass das Klemmelement 9 in Richtung des Milchsammelstücks verschoben wird.

Der Endabschnitt 6 des Milchschlauchs kann mehrere Nuten 11 aufweisen, in die eine entsprechende Anzahl von Vorsprüngen 26 eingreift. Es besteht auch die Möglichkeit, dass das Klemmelement 9 über ein Gewinde mit den Stegen 25 verbunden ist, welches im Wesentlichen konisch ausgebildet ist. Es besteht auch die Möglichkeit, dass der Milchschlauch entsprechend ausgestaltet ist, so dass im unverbundenen Zustand die Stege 25 durch die Ausgestaltung des Endbereichs des Milchschlauchs nach außen gedrückt werden und durch Hochschieben des Klemmelementes 9 diese gegen den Endabschnitt 6 des Milchschlauchs 5 gedrückt werden.

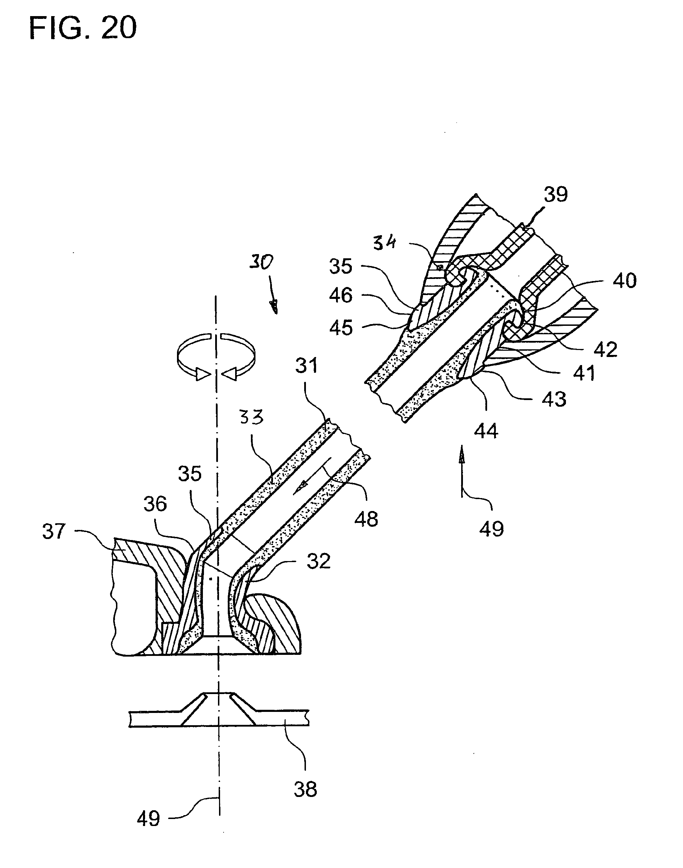

In Fig. 20 ist ein axialer Längsschnitt durch einen Milchschlauch 30 dargestellt. Der Milchschlauch 30 weist einen Zwischenbereich 31, einen ersten Endabschnitt 32 und einen zweiten Endabschnitt 49 auf. Der Zwischenbereich 31 ist aus einem weichen Werkstoff 33 gefertigt. Dem gegenüber sind die beiden Endabschnitte 32, 49 aus einem harten Werkstoff 35 gefertigt. Die vorliegend dargestellten Endabschnitte 32, 49 befinden sich ausschließlich am Außenumfang des Milchschlauchs 30. Das heißt, Milch, welche in einer Milchflußrichtung 48 durch den Milchschlauch 30 hindurch tritt, kommt über die gesamte Länge des Milchschlauchs 30 lediglich mit dem weichen Werkstoff 33 in Kontakt. Im ersten Endabschnitt 32 ist ein abgewinkelter Bereich 36 erkennbar. Der abgewinkelte Bereich 36 mündet in einen Deckel 37 eines nicht weiter dargestellten Milchsammelbehälters 38. Im Bereich des zweiten Endabschnitts 49 ist teilweise ein Melkbecher 34 sowie ebenfalls teilweise ein Zitzengummi 39 dargestellt.

Die Montage des Milchschlauchs 30 erfolgt, in dem in einem ersten Schritt das Zitzengummi 39 über den harten Werkstoff 35 des zweiten Endabschnitts 49 geführt und auf einer Befestigungsfläche 40 zur Anlage gebracht wird. Ein versehentliches Herabrutschen des Zitzengummis 39 vom Milchschlauch 30 wird durch einen Kragen 41 verhindert, der sich an einem Ende des Milchschlauchs 30 befindet und in radialer Richtung nach außen aufgeweitet ist. In der dazu entgegengesetzten Richtung weist der erste Endabschnitt 32 einen zweiten Kragen 42 auf, der ein Herabrutschen des Zitzengummis 39 in die entgegengesetzte Richtung verhindert. Der zweite Kragen 42 ist bei der vorliegend gezeigten Ausführungsform gleichzeitig als Anlagefläche 43 eines Rastmittels 44 ausgebildet. Die Anlagefläche 43 dient im zusammengebauten Zustand zusätzlich zur formschlüssigen Befestigung des Milchschlauches innerhalb des Melkbechers 34. Der zweite Endabschnitt 49 weist dazu zusätzlich Einführschrägen 45 auf, die das Einstecken des zusammengebauten Milchschlauchs zusammen mit dem Zitzengummi 39 in den Melkbecher 34 erleichtern. Die durch die Anlagefläche 43 ausgebildeten Rastmittel 44 werden beim Einstecken in den Melkbecher 34 in radial nach innen weisender Richtung zusammengedrückt, so dass der zweite Endabschnitt 39 durch die kleiner ausgelegte Öffnung im Melkbecher 34 hindurch treten kann.

Um diesen Vorgang zu erleichtern, sind partielle Ausnehmungen am zweiten Endabschnitt 39 vorgesehen, so dass sich die Rastmittel 44 während des Zusammenbauvorganges relativ leicht verformen lassen. Durch den zweiten Endabschnitt 49 werden bei der vorliegend dargestellten Auslegung des Milchschlauchs 30 das Zitzengummi 39, der Melkbecher 38 und der Milchschlauch 30 gegeneinander gepresst, so dass ein sicherer Halt und gleichzeitig eine gute Dichtigkeit erreicht wird.

Eine Demontage kann dann durch einfaches Lösen der Rastmittel 44 geschehen. Nach dem Lösen der Rastmittel 44 kann der Milchschlauch zusammen mit dem Zitzengummi einfach aus dem Melkbecher 34 entnommen und ausgetauscht werden. Bei Bedarf ist es auch möglich, nur eine einzelne Komponente, wie beispielsweise den Milchschlauch 30 oder das Zitzengummi 39, getrennt auszutauschen, um danach die Montage in umgekehrter Richtung vorzunehmen. Bei der dargestellten Ausführungsform teilen sich Zitzengummi 39 und Melkbecher 34 eine gemeinsame Befestigungsfläche 40 an der Außenseite des zweiten Endabschnitts 49. Bei anderen alternativen Ausführungsformen können diese aber auch auf mehrere getrennte Befestigungsflächen 40 aufgeteilt werden. Dies würde zu einer Trennung von Verbindungs- und Befestigungsmitteln führen. Während hier das Verbindungsmittel zum Anschluss des Milchschlauchs an den Melkbecher aus dem Kragen 41 und dem Rastmittel 44 besteht, bilden der Kragen 41 und der Kragen 42 das Befestigungsmittel zur Befestigung des Zitzengummis 39 am Milchschlauch 30. Wie gesagt, können bei anderen Ausführungsformen bei Bedarf Befestigungs- und Verbindungsmittel getrennt voneinander angeordnet und andersartig ausgebildet sein. Um eine besonders gute Anpassung der Melkeinheit an unterschiedlichste Zitzenstellungen zu gewährleisten, ist der Milchschlauch 30 relativ zum Milchsammelbehälter 38 um eine Drehachse 47 drehbar angebunden. Neben dem abgewinkelten Bereich 36, weist der Milchschlauch 30 damit eine zweite Anpassungsmöglichkeit an anatomische bzw. räumliche Gegebenheiten auf.

Im Übrigen ist die vorliegende Erfindung nicht auf die dargestellten Ausführungsbeispiele beschränkt. Es sind vielmehr zahlreiche Abwandlungen der Erfindung im Rahmen der Patentansprüche möglich. So können beispielsweise anstelle der beschriebenen Werkstoffe zahlreiche andere harte oder weiche Werkstoffe zur Anwendung kommen oder die Gestaltung der Verbindungs- und Befestigungsmittel variiert werden.

### Bezugszeichenliste

- 1: Kupplungselement
- 2: kegelstumpfförmiger Abschnitt
- 3: Wand
- 4: Boden
- 5: Milchschlauch
- 6: erster Endabschnitt
- 7: Milchsammelstück
- 8: Achse
- 9: Klemmelement
- 10: Arm
- 11: Nut
- 12: Segment
- 13: kegelförmige Erweiterung
- 14: Fortsatz
- 15: Klemmelement
- 16: Rand
- 17: Durchgang
- 18: Adapter
- 19: Flansch
- 20: Klemmelement
- 21: Durchgangsbohrung
- 22: Nase
- 23: Schlitz
- 24: Gewinde
- 25: Steg
- 26: Vorsprung
- 27: Anschlag
- 30.: Milchschlauch
- 31.: Zwischenbereich
- 32.: erster Endabschnitt
- 33.: Weicher Werkstoff
- 34.: Melkbecher
- 35.: Harter Werkstoff
- 36.: Abgewinkelter Bereich
- 37.: Deckel
- 38.: Milchsammelbehälter
- 39.: Zitzengummi
- 40.: Befestigungsfläche
- 41.: Kragen
- 42.: Zweiter Kragen
- 43.: Anlagefläche
- 44.: Rastmittel
- 45.: Einführschräge
- 47.: Drehachse
- 48.: Milchflußrichtung
- 49.: zweiter Endabschnitt

## Patentansprüche

1. Melkeinheit umfassend mehrere Milchschläuche (5), jeder Milchschlauch weist einen ersten Endabschnitt (6) und einen zweiten Endabschnitt auf, und ein Milchsammelstück (7 ), das mit den ersten Endabschnitten (6) der Milchschläuche (5 ) verbunden ist, **dadurch gekennzeichnet, dass** das Milchsammelstück (7) Kupplungselemente (1) aufweist, die jeweils mit dem ersten Endabschnitt (6) eines Milchschlauchs (5) zusammenwirken, dass Klemmelemente (9, 15, 20) vorgesehen sind, welches so mit den Kupplungselementen (1) zusammenwirken, dass jeweils eine im Wesentlichen fluiddichte Verbindung zwischen dem Milchschlauch (5, 30) und dem Milchsammelstück (7, 37, 38) entsteht, wobei die Klemmelemente (1) eine Klemmeinheit bilden, welche mit dem Milchsammelstück (7, 37, 38) lösbar verbunden ist.

2. Melkeinheit nach Anspruch 1 umfassend mehrere Milchschläuche (5), jeder Milchschlauch weist einen ersten Endabschnitt (6) und einen zweiten Endabschnitt auf, ein Milchsammelstück (7), das mit dem ersten Endabschnitt (6) des Milchschlauchs (5) verbunden ist, und Melkbecher, welche jeweils ein Zitzengummi und eine Melkbecherhülse aufweisen, wobei jeweils ein Melkbecher mit dem zweiten Endabschnitt eines Milchschlauchs (5) verbunden ist, **dadurch gekennzeichnet, dass** das Milchsammelstück (7 ) erste Kupplungselemente (1) aufweist, die jeweils mit dem ersten End-abschnitt (6) eines Milchschlauchs (5) zusammenwirken, dass erste Klemmelemente (9, 15, 20) vorgesehen sind, welche so mit den ersten Kupplungselementen (1) zusammenwirken, dass jeweils eine im Wesentlichen fluiddichte Verbindung zwischen dem Milchschlauch (5) und dem Milchsammelstück (7) entsteht, wobei die ersten Klemmelemente (1) eine Klemmeinheit bilden, welche mit dem Milchsammelstück (7) lösbar verbunden ist, dass die Melkbecher zweite Kupplungselemente (1) aufweisen, welche jeweils mit dem zweiten Endabschnitt eines Milchschlauchs (5) zusammenwirken, und dass zweite Klemmelemente (9, 15, 20) vorgesehen sind, welche so mit den zweiten Kupplungselementen (1) zusammenwirken, dass jeweils eine im Wesentlichen fluiddichte Verbindung zwischen dem Milchschlauch (5) und dem Melkbecher entsteht.

3. Melkeinheit nach Anspruch 1 oder 2, **dadurch gekennzeichnet, dass** das Kupplungselement (1) im Wesentlichen kegelstumpfförmig ausgebildet ist und in den ersten bzw. zweiten Endabschnitt des Milchschlauchs (5) hineinragt.

4. Melkeinheit nach Anspruch 3, **dadurch gekennzeichnet, dass** beabstandet zur Basis des kegelstumpfförmigen Kupplungselementes (1) eine diese umgebende, sich über wenigstens einen Teil der axialen Länge erstreckende Wand (3) vorgesehen ist.

5. Melkeinheit nach Anspruch 4, **dadurch gekennzeichnet, dass** das Klemmelement (9, 15, 20) mit der Wand (3) kraft- und/oder formschlüssig verbindbar ist.

6. Melkeinheit nach Anspruch 3, 4 oder 5, **dadurch gekennzeichnet, dass** der erste und/oder zweite Endabschnitt (6) des Milchschlauchs (5) eine zum Kupplungselement (1) entsprechend ausgebildete Innenform aufweist.

7. Melkeinheit nach wenigstens einem der vorhergehenden Ansprüche 3 bis 6, **dadurch gekennzeichnet, dass** der erste und/oder der zweite Endabschnitt des Milchschlauchs (5) wenigstens eine Nut (11) aufweist, in die ein Kragen des Klemmelementes eingreift.

8. Melkeinheit nach einem der Ansprüche 3 bis 7, **dadurch gekennzeichnet, dass** der erste und/oder der zweite Endabschnitt (6 ) des Milchschlauchs (5) elastische Segmente aufweist.

9. Melkeinheit nach wenigstens einem der vorhergehenden Ansprüche 1 bis 8, **dadurch gekennzeichnet, dass** das Klemmelement (9, 15, 20) wenigsten ein, sich in radialer Richtung erstreckendes elastisches Segment (12) aufweist.

10. Melkeinheit nach wenigstens einem der vorhergehenden Ansprüche 1 bis 9, **dadurch gekennzeichnet, dass** der erste und/oder zweite Endabschnitt (6) des Milchschlauchs (5) einen Adapter (18) aufweist.

11. Melkeinheit nach wenigstens einem der vorhergehenden Ansprüche 1 bis 10, **dadurch gekennzeichnet, dass** das Klemmelement (9, 15, 20) einen Durchgang aufweist, durch den sich der Milchschlauch (5) hindurcherstreckt, wobei das Klemmelement (9, 15, 20) einen Schlitz (23) aufweist, durch welchen ein Abschnitt des Milchschlauchs (5) hindurchführbar ist.

## Claims

1. Milking unit comprising a plurality of milk hoses (5), each milk hose has a first end section (6) and a second end section, and a milk collecting component (7), which is connected to the first end sections (6) of the milk hoses (5), **characterized in that** the milk collecting component (7) has coupling elements (1) which each interact with the first end section (6) of a milk hose (5), **in that** clamping elements (9, 15, 20) are provided, which interact with the coupling elements (1) in such a way that in each case an essentially fluid-tight connection arises between the milk hose (5, 30) and the milk collecting component (7, 37, 38), the clamping elements (1) forming a clamping unit which is connected to the milk collecting component (7, 37, 38) in a releasable manner.

2. Milking unit according to Claim 1, comprising a plurality of milk hoses (5), each milk hose has a first end section (6) and a second end section, a milk collecting component (7), which is connected to the first end section (6) of the milk hose (5), and milking cups which each have a teat rubber and a milking cup sleeve, a respective milking cup being connected to the second end section of a milk hose (5), **characterized in that** the milk collecting component (7) has first coupling elements (1) which each interact with the first end section (6) of a milk hose (5), **in that** first clamping elements (9, 15, 20) are provided, which interact with the first coupling elements (1) in such a way that in each case an essentially fluid-tight connection arises between the milk hose (5) and the milk collecting component (7), the first clamping elements (1) forming a clamping unit which is connected to the milk collecting component (7) in a releasable manner, **in that** the milking cups have second coupling elements (1) which each interact with the second end section of a milk hose (5), and **in that** second clamping elements (9, 15, 20) are provided, which interact with the second coupling elements (1) in such a way that in each case an essentially fluid-tight connection arises between the milk hose (5) and the milking cup.

3. Milking unit according to Claim 1 or 2, **characterized in that** the coupling element (1) is formed essentially in frustoconical fashion and projects into the first or second end section of the milk hose (5).

4. Milking unit according to Claim 3, **characterized in that**, at a distance from the base of the frustoconical coupling element (1), a wall (3) is provided which surrounds said base and extends over at least part of the axial length.

5. Milking unit according to Claim 4, **characterized in that** the clamping element (9, 15, 20) can be connected to the wall (3) in force-locking and/or positively locking fashion.

6. Milking unit according to Claim 3, 4 or 5, **characterized in that** the first and/or second end section (6) of the milk hose (5) has an inner form embodied in a manner corresponding to the coupling element (1).

7. Milking unit according to at least one of the preceding Claims 3 to 6, **characterized in that** the first and/or the second end section of the milk hose (5) has at least one groove (11) into which a collar of the clamping element engages.

8. Milking unit according to one of Claims 3 to 7, **characterized in that** the first and/or the second end section (6) of the milk hose (5) has elastic segments.

9. Milking unit according to at least one of the preceding Claims 1 to 8, **characterized in that** the clamping element (9, 15, 20) has at least one elastic segment (12) extending in a radial direction.

10. Milking unit according to at least one of the preceding Claims 1 to 9, **characterized in that** the first and/or second end section (6) of the milk hose (5) has an adapter (18).

11. Milking unit according to at least one of the preceding Claims 1 to 10, **characterized in that** the clamping element (9, 15, 20) has a passage through which the milk hose (5) extends, the clamping element (9, 15, 20) having a slot (23) through which a section of the milk hose (5) can be led.

## Revendications

1. Unité de traite comprenant plusieurs tuyaux de traite (5), chaque tuyau de traite présentant une première portion d'extrémité (6) et une deuxième portion d'extrémité, et un collecteur de traite (7), qui est relié aux premières portions d'extrémité (6) des tuyaux de traite (5), **caractérisée en ce que** le collecteur de traite (7) présente des éléments d'accouplement (1), qui coopèrent à chaque fois avec la première portion d'extrémité (6) d'un tuyau de traite (5), **en ce que** des éléments de serrage (9, 15, 20) sont prévus, lesquels coopèrent avec les éléments d'accouplement (1) de telle sorte qu'une liaison essentiellement étanche aux fluides soit à chaque fois produite entre le tuyau de traite (5, 30) et le collecteur de traite (7, 37, 38), les éléments de serrage (1) formant une unité de serrage qui est reliée de manière desserrable au collecteur de traite (7, 37, 38).

2. Unité de traite selon la revendication 1, comprenant plusieurs tuyaux de traite (5), chaque tuyau de traite présentant une première portion d'extrémité (6) et une deuxième portion d'extrémité, un collecteur de traite (7), qui est relié à la première portion d'extrémité (6) du tuyau de traite (5), et des gobelets trayeurs qui présentent chacun un caoutchouc pour trayon et un manchon pour gobelets trayeurs, un gobelet trayeur étant à chaque fois relié à la deuxième portion d'extrémité d'un tuyau de traite (5), **caractérisée en ce que** le collecteur de traite (7) présente des premiers éléments d'accouplement (1), qui coopèrent à chaque fois avec la première portion d'extrémité (6) d'un tuyau de traite (5), **en ce que** des premiers éléments de serrage (9, 15, 20) sont prévus, lesquels coopèrent avec les premiers éléments d'accouplement (1) de telle sorte qu'une liaison essentiellement étanche aux fluides soit à chaque fois produite entre le tuyau de traite (5) et le collecteur de traite (7), les premiers éléments de serrage (1) formant une unité de serrage, qui est reliée de manière desserrable au collecteur de traite (7), **en ce que** les gobelets trayeurs présentent des deuxièmes éléments d'accouplement (1) qui coopèrent à chaque fois avec la deuxième portion d'extrémité d'un tuyau de traite (5), et **en ce que** des deuxièmes éléments de serrage (9, 15, 20) sont prévus, lesquels coopèrent avec les deuxièmes éléments d'accouplement (1) de telle sorte qu'une liaison essentiellement étanche aux fluides soit à chaque fois produite entre le tuyau de traite (5) et le gobelet trayeur.

3. Unité de traite selon la revendication 1 ou 2, **caractérisée en ce que** l'élément d'accouplement (1) est réalisé essentiellement sous forme tronconique et pénètre dans la première respectivement deuxième portion d'extrémité du tuyau de traite (5).

4. Unité de traite selon la revendication 3, **caractérisée en ce qu'**à distance de la base de l'élément d'accouplement de forme tronconique (1), est prévue une paroi (3) entourant celui-ci, s'étendant sur au moins une partie de la longueur axiale.

5. Unité de traite selon la revendication 4, **caractérisée en ce que** l'élément de serrage (9, 15, 20) peut être relié à la paroi (3) par engagement par force et/ou par coopération de forme.

6. Unité de traite selon la revendication 3, 4 ou 5, **caractérisée en ce que** la première et/ou la deuxième portion d'extrémité (6) du tuyau de traite (5) présente(nt) une forme interne réalisée de manière correspondant à l'élément d'accouplement (1).

7. Unité de traite selon au moins l'une quelconque des revendications précédentes 3 à 6, **caractérisée en ce que** la première et/ou la deuxième portion d'extrémité du tuyau de traite (5) présente(nt) au moins une rainure (11) dans laquelle vient en prise un rebord de l'élément de serrage.

8. Unité de traite selon l'une quelconque des revendications 3 à 7, **caractérisée en ce que** la première et/ou la deuxième portion d'extrémité (6) du tuyau de traite (5) présente(nt) des segments élastiques.

9. Unité de traite selon au moins l'une quelconque des revendications précédentes 1 à 8, **caractérisée en ce que** l'élément de serrage (9, 15, 20) présente au moins un segment élastique (12) s'étendant dans la direction radiale.

10. Unité de traite selon au moins l'une quelconque des revendications 1 à 9, **caractérisée en ce que** la première et/ou la deuxième portion d'extrémité (6) du tuyau de traite (5) présente(nt) un adaptateur (18).

11. Unité de traite selon au moins l'une quelconque des revendications précédentes 1 à 10, **caractérisée en ce que** l'élément de serrage (9, 15, 20) présente un passage à travers lequel s'étend le tuyau de traite (5), l'élément de serrage (9, 15, 20) présentant une fente (23) à travers laquelle peut être guidée une portion du tuyau de traite (5).
